# EUROPÄISCHE PATENTSCHRIFT

(11) **EP 1 586 866 B1**
(45) Veröffentlichungstag und Bekanntmachung des Hinweises auf die Patenterteilung: **08.10.2008**
(21) Anmeldenummer: 05007703.1
(22) Anmeldetag: 08.04.2005
(51) Int. Cl.: G01D 5/249

(54) **Optoelektronisches Verfahren zur Bestimmung der Position eines Sensors zur Kompensation von Justage-Fehlern**
Optoelectronic method of determining the postion of a sensor for compensating adjustment errors
Procédé optoélectronique de déterminer la position d'un capteur pour compenser des erreurs d'ajustement

(30) Priorität: 16.04.2004 DE 102004018404
(43) Veröffentlichungstag der Anmeldung: 19.10.2005
(73) Patentinhaber: Leuze electronic GmbH + Co KG, 73277 Owen/Teck (DE)
(72) Erfinder: Wörner, Jörg, 73235 Weilheim/Teck (DE)
(74) Vertreter: Ruckh, Rainer Gerhard

(56) Entgegenhaltungen:
- DE-C1- 19 813 803
- US-A1- 2002 104 716
- PATENT ABSTRACTS OF JAPAN Bd. 009, Nr. 199 (P-380), 16. August 1985 (1985-08-16) & JP 60 063416 A (MAX KK), 11. April 1985 (1985-04-11)

## Beschreibung

Aus der DE 297 124 38 U1 ist eine optoelektronische Vorrichtung bekannt, die als Weg-Codiervorrichtung ausgebildet ist und die zur Positionierung eines Hängeförderers genutzt wird. Der Hängeförderer ist entlang einer Codeschiene verfahrbar, wobei auf der Codeschiene in Bewegungsrichtung des Hängeförderers in vorgegebenen Positionen Barcodes als Codes hintereinander angebracht sind. In den einzelnen Barcodes sind deren Absolutpositionen kodiert. Zur Positionierung des Hängeförderers relativ zu dem Positionsmaßstab ist an diesem ein Barcodelesegerät als Sensor fest installiert. Das Barcodelesegerät weist einen Sendelichtstrahlen emittierenden Sender, einen Empfangslichtstrahlen empfangenden Empfänger in Form einer Fotodiode sowie eine Auswerteeinheit zur Auswertung der am Empfänger anstehenden Empfangssignale auf. Weiterhin weist das Barcodelesegerät eine Ablenkeinheit in Form eines rotierenden Polygonspiegelrads auf. Mit dem Polygonspiegelrad werden die vom Sender emittierten Sendelichtstrahlen innerhalb einer Abtastebene periodisch abgelenkt. Dadurch wird auf dem Positionsmaßstab eine in Bewegungsrichtung des Hängeförderers verlaufende Abtastlinie erzeugt. Die die Kodierung des Barcodes enthaltenden hellen und dunklen Strichelemente sind senkrecht zur Bewegungsrichtung des Hängeförderers orientiert. Die Abtastlinie ist so dimensioniert, dass wenigstens ein Barcode des Positionsmaßstabs vollständig erfasst wird. Die als Empfangslichtstrahlen am Barcode reflektierten Sendelichtstrahlen enthalten eine dem Strichmuster des Barcodes entsprechende Amplitudenmodulation, die in der Auswerteeinheit zur Dekodierung des Barcodes ausgewertet wird. Durch Auswertung der im Barcode kodierten Positionsinformationen sowie der Lage des Barcodes innerhalb der Abtastebene kann die Position des Barcodelesegeräts und damit des Hängeförderers bestimmt werden.

Eine exakte Positionsbestimmung setzt jedoch voraus, dass die Abtastlinie exakt in Bewegungsrichtung des Hängeförderers verläuft und damit senkrecht zu den Strichelementen des Barcodes orientiert ist. Durch Dejustagen des Barcodelesegeräts am Hängeförderer, die insbesondere auch während des Betriebs des Hängeförderers durch externe Störeinflüsse auftreten können, kann die Abtastlinie bezüglich ihrer Soll-Lage verkippt sein, wodurch ein systembedingter Messfehler in der Positionsbestimmung des Barcodelesegeräts relativ zu dem jeweils detektierten Barcode erhalten wird.

Weiterhin ist nachteilig, dass ein Barcode nicht mehr dekodierbar ist, wenn sich auf diesem im Bereich der Abtastlinie eine lokale Verschmutzung befindet.

Schließlich ergeben sich bei dem Barcodelesegerät systembedingte Ungenauigkeiten bei der Bestimmung der Relativlage zu einem Barcode durch Ungenauigkeiten in der Bestimmung der Anfangs- und Endpunkte der Abtastlinien, die auf elektronischem Weg und/oder mit zusätzlicher Sensorik bestimmt werden müssen. Schließlich ergeben sich systembedingte Ungenauigkeiten und Fehlerquellen bei der Positionsbestimmung durch die im Barcodelesegerät vorgesehenen bewegten Teile, insbesondere dem Polygonspiegelrad.

Die US 2002/0104716 A1 beschreibt eine Vorrichtung zur aktuellen Positionsbestimmung eines Aufzugsfahrzeugs. Die Vorrichtung umfasst eine Sensorik mit ein oder zwei an dem Aufzugsfahrzeug angebrachten Flächenkameras. Das Aufzugssystem wird entlang eines Längenmaßstabs verfahren, welcher aus Positionsmarken besteht, die von den Flächenkameras gelesen werden.

Die DE 198 13 803 betrifft eine Messanordnung zur Längenmessung, bestehend aus zwei, in Längsrichtung gegeneinander verschiebbaren Baugruppen. Die erste Baugruppe besteht aus einem Träger, an dem eine oder mehrere Codefeldmasken mit einer rechtwinklig und mittig angeordneten gepulsten Laserdiode durchleuchtet werden, angebracht sind. Dieses Durchlicht wird von einem CCD-Sensor der zweiten Baugruppe erfasst und aus dessen Ausgangssignal von einem Einchipmikroprozessor der Längenmesswert errechnet und ausgegeben.

Der Erfindung liegt die Aufgabe zugrunde ein Verfahren der eingangs genannten Art bereitzustellen, mittels dessen bei möglichst geringem konstruktivem Aufwand eine möglichst genaue Positionierung eines Sensors relativ zu einem Positionsmaßstab ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Relativpositionsbestimmung von einem Sensor und einem von Marken gebildeten Positionsmaßstab, welche relativ zueinander bewegbar sind. Der Sensor weist eine Beleuchtungseinheit zur Beleuchtung der Marken, eine Flächenkamera zur Erfassung der Marken und eine Auswerteeinheit zur Auswertung der Ausgangssignale der Flächenkamera auf. Durch Erfassung von in den Marken kodierten Positionsinformationen und durch Ermittlung der Lage einer jeweils erfassten Marke innerhalb des von der Flächenkamera erfassten Bildes ist die Position des Sensors relativ zum Positionsmaßstab bestimmbar. Während eines Einlernvorganges wird der Sensor relativ zum Positionsmaßstab ausgerichtet, nach erfolgter Ausrichtung wird die Geometrie wenigstens einer mit der Flächenkamera erfassten Marke als Sollgröße in der Auswerteeinheit abgespeichert. Während der auf den Einlernvorgang folgenden Betriebsphase werden aus den Abweichungen aktuell ermittelter Geometrien von Marken in Bezug auf die abgespeicherte Sollgröße in der Auswerteeinheit Korrekturwerte zur Kompensation von Justagefehlern berechnet.

Ein wesentlicher Vorteil der Erfindung besteht darin, dass der Sensor keine beweglichen Komponenten aufweist, so dass keine dadurch bedingten Ungenauigkeiten bei der Positionierung des Sensors relativ zum Positionsmaßstab entstehen.

Ein weiterer wesentlicher Vorteil der Erfindung besteht darin, dass durch die vollständige Erfassung wenigstens einer Marke mit der Flächenkamera eine exakte und störungsunempfindliche Positionierung des Sensors relativ zum Positionsmaßstab ermöglicht wird.

Erfindungsgemäß werden bei der Bilderfassung der Marken, insbesondere Barcodes, Bildverzerrungen, die durch Dejustage des Sensors relativ zum Positionsmaßstab bedingt sind, automatisch erfasst und kompensiert.

Hierzu wird vor der Betriebsphase der optoelektronischen Vorrichtung bestehend aus Sensor und Positionsmaßstab ein Einlernvorgang durchgeführt. Während des Einlernvorganges wird bei relativ zum Positionsmaßsystem ausgerichtetem Sensor die Geometrie wenigstens einer mit der Flächenkamera erfassten Marke ermittelt und als Sollgröße in der Auswerteeinheit abgespeichert. Für den Fall, dass die Marken von Barcodes gebildet sind, weisen diese eine rechteckige Kontur auf. Ist der Sensor zum Positionsmaßstab exakt ausgerichtet, das heißt die Bildebene der Flächenkamera ist parallel zur Ebene des Barcodes orientiert, so weist auch das auf die Flächenkamera abgebildete Bild des Barcodes eine entsprechende rechteckige Kontur auf, die in der Auswerteeinheit abgespeichert wird. Wird während des nachfolgenden Betriebs die optoelektronische Vorrichtung durch externe Störeinflüsse dejustiert, so ist die Ebene der Flächenkamera relativ zur Ebene des detektierten Barcodes verkippt. Dementsprechend wird in der Flächenkamera eine trapezförmige Kontur des Barcodes registriert. Bei bekannter Sollgröße und bekannten Geometriedaten des Barcodes wird dann in der Auswerteeinheit aus der trapezförmigen Kontur die räumliche Verkippung der Bildebene der Flächenkamera relativ zum Positionsmaßstab berechnet und zur Kompensation bei der Positionsbestimmung des Barcodes verwendet. Damit wird die Genauigkeit der Positionsbestimmung des Sensors relativ zum Positionsmaßstab durch Dejustagen nicht beeinträchtigt.

Dabei ist insbesondere vorteilhaft, dass bei einer Bildaufnahme einer Marke mittels der Flächenkamera diese Marke zu einem definierten Aufnahmezeitpunkt erfasst wird. Zudem werden die Ausgangssignale der Flächenkamera zeitlich definiert, insbesondere durch ein synchrones Auslesen der Pixelwerte der Flächenkamera, in die Auswerteeinheit zur Auswertung übertragen. Damit wird ohne weitere Synchronisationssignale bei definiertem zeitlichen Bezug zur Generierung eines Bildes einer Marke mittels der Flächenkamera durch Auswertung der Lage der Marke innerhalb des von der Flächenkamera generierten Bildes die Position der Marke relativ zum Sensor exakt bestimmt. Zusammen mit der Auswertung der in der Marke kodierten Positionsinformationen kann somit der Sensor positionsgenau relativ zum Positionsmaßstab positioniert werden.

In einer besonders vorteilhaften Ausführungsform der Erfindung sind die Marken des Positionsmaßstabs von Barcodes gebildet. Die Barcodes weisen Strichmuster bestehend aus alternierenden Folgen von hellen und dunklen Strichelementen auf, in welchen die Absolutpositionen der Barcodes kodiert sind. Die Längsachsen der Strichelemente sind dabei senkrecht zur Bewegungsrichtung des Sensors relativ zum Positionsmaßstab orientiert.

In einer besonders einfachen Ausgestaltung wird zur Erfassung eines Barcodes nur eine einzelne Zeile von Pixeln der Flächenkamera, welche in dieser Bewegungsrichtung verläuft, verwendet. Aufgrund der bekannten Orientierung der Strichelemente des Barcodes ist gewährleistet, dass hiermit das Strichmuster des Barcodes sowie dessen Lage innerhalb des Bildes der Flächenkamera bestimmbar ist. Da in diesem Fall nur eine Zeile der matrixförmigen Pixelanordnung der Flächenkamera ausgewertet werden muss, kann die Auswertung der Ausgangssignale in der Auswerteeinheit mit sehr geringem Rechenzeitaufwand und dementsprechend mit einer kurzen Ansprechzeit durchgeführt werden.

Im Betrieb der optoelektronischen Vorrichtung kann es durch externe Störeinflüsse zu lokalen Verschmutzungen der Barcodes des Positionsmaßstabs kommen. Um derartige Störeinflüsse zu vermeiden, wird in einer vorteilhaften Weiterbildung zur Erfassung eines Barcodes nicht nur eine Zeile der Flächenkamera ausgewertet. Vielmehr werden mehrere in Bewegungsrichtung verlaufende, in vorgegebenen Abständen zueinander liegende Zeilen der Flächenkamera zur Auswertung herangezogen. Die Anzahl dieser Zeilen und deren Anordnungen sind so gewählt, dass auch bei Vorliegen von lokalen Verschmutzungen mit einem Teil der Zeilen der jeweilige Barcode noch vollständig erfasst wird. Durch Selektion dieser Zeilen kann somit auch bei Vorliegen von Verschmutzungen der jeweilige Barcode zur Positionsbestimmung noch ausgewertet werden.

In einer weiteren vorteilhaften Ausgestaltung können zur Erfassung des Strichmusters eines Barcodes anstelle einer einzelnen Zeile auch mehrere in Bewegungsrichtung verlaufende, nebeneinander liegende Zeilen ausgewertet werden. In der Auswerteeinheit werden dann die benachbarten Pixel verschiedener Zeilen, insbesondere durch Mittelwertbildungen, korreliert. Durch diese Auswertung wird eine erhebliche Kontrastverbesserung der registrierten Strichmuster des Barcodes und dadurch bedingt eine erhöhte Nachweisempfindlichkeit bei der Detektion des Barcodes erhalten. Der dabei erzielte Kontrast der registrierten Strichmuster kann zudem mit einem Schwellwert bewertet werden. Wird bei dieser Auswertung ein zu geringer Kontrast der registrierten Barcodes ermittelt, kann vom Sensor eine entsprechende Warnmeldung ausgegeben werden.

In einer vorteilhaften Weiterbildung der Erfindung sind die mit der optoelektronischen Vorrichtung erfassten Marken als Datamatrix-Codes, insbesondere Datamatrix ECC200-Codes ausgebildet. Im Unterschied zu Barcodes bestehen die Datamatrix-Codes aus zweidimensionalen Anordnungen von hellen und dunklen Flächensegmenten. Die Datamatrix-Codes weisen gegenüber Barcodes bei gleichem Informationsgehalt eine erheblich geringere Modulbreite auf. Damit kann die Beleuchtung dieser Datamatrix-Codes einfacher durchgeführt werden. Weiterhin kann auch die Flächenkamera eine kleinere Bauform aufweisen, wodurch diese schneller und empfindlicher ausgebildet ist. Schließlich können Datamatrix-Codes des Typs ECC200 noch bei 20 % Verschmutzung sicher erkannt werden. Dadurch können die Datamatrix-Codes im Vergleich zu Barcodes bei höheren Geschwindigkeiten noch sicher erkannt werden.

Die Erfindung wird im Nachstehenden anhand der Zeichnungen erläutert. Es zeigen:
- Figur 1:: Schematische Darstellung einer optoelektronischen Vorrichtung bestehend aus einem Sensor und einem Positionsmaßstab.
- Figur 2:: Teildarstellung eines im Sichtfeld einer Flächenkamera des Sensors liegenden Ausschnitts des Positionsmaßstabs für die optoelektronische Vorrichtung gemäß Figur 1.
- Figur 3:: Schematische Darstellung der auf die Flächenkamera abgebildeten Kontur einer Marke des Positionsmaßstabs der Vorrichtung gemäß Figur 1 bei
a) gegenüber dem Positionsmaßstab justierten Sensor.
b) gegenüber dem Positionsmaßstab dejustierten Sensor.

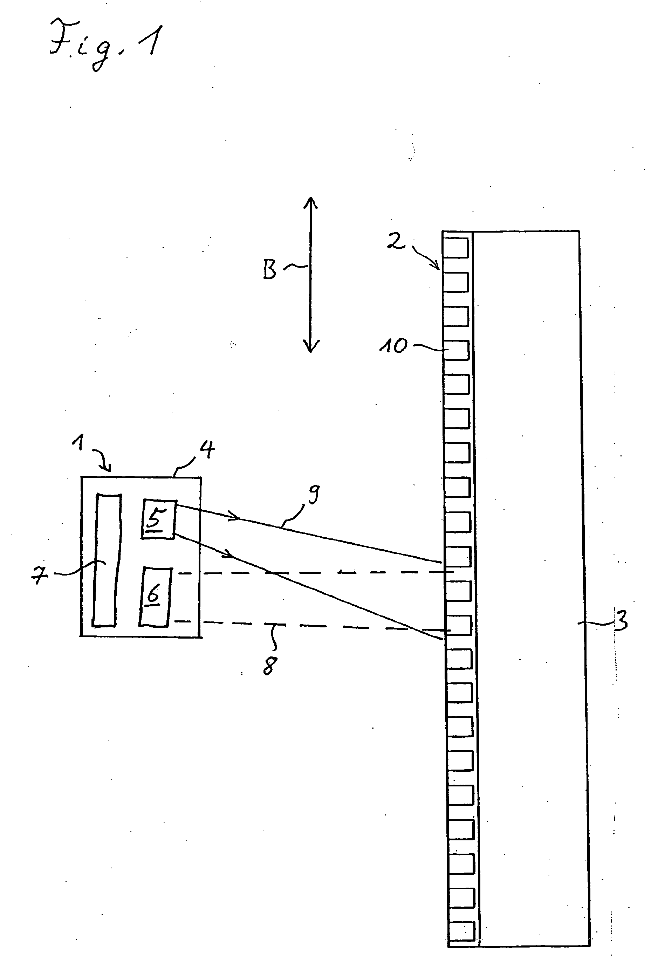

Figur 1 zeigt schematisch ein Ausführungsbeispiel einer optoelektronischen Vorrichtung bestehend aus einem Sensor 1 und einem Positionsmaßstab 2. Der Sensor 1 und/oder das Positionsmaßstab 2 sind beweglich angeordnet, so dass diese in der mit dem Pfeil B gekennzeichneten Bewegungsrichtung gegeneinander bewegbar sind. Mit der in Figur 1 dargestellten optoelektronischen Vorrichtung können relativ zueinander bewegbare Gegenstände positioniert werden. Im vorliegenden Fall ist ein nicht dargestelltes Fahrzeug gegenüber einem stationären Gegenstand in Form eines Regallagers 3 zu positionieren. Der Sensor 1 ist dabei an dem Fahrzeug montiert, während das Positionsmaßstab 2 am Regallager 3 montiert ist.

Zur Erfassung der Fahrzeugposition relativ zum stationären Gegenstand wird das Positionsmaßstab 2 fortlaufend mit dem Sensor 1 abgetastet.

Der Sensor 1 gemäß Figur 1 ist in einem Gehäuse 4 integriert und weist eine Beleuchtungseinheit 5 und als Empfänger eine Flächenkamera 6 auf, die an eine gemeinsame Auswerteeinheit 7 angeschlossen sind.

Die Auswerteeinheit 7 ist von einem Microcontroller oder dergleichen gebildet. Die Flächenkamera 6 ist als CCD-Kamera, CMOS-Kamera oder dergleichen ausgebildet und weist eine flächige matrixförmige Anordnung von Empfangselementen bildenden Pixeln auf. Die optisch aktive Fläche der Flächenkamera 6 weist im vorliegenden Fall eine rechteckige Kontur auf, wobei die Pixel eine Anordnung von M übereinander liegenden Zeilen mit jeweils N Pixeln bilden. Dabei sind die Zeilen mit den jeweils N Pixeln in der Bewegungsrichtung B orientiert. Der Sensor 1 ist dabei derart am Fahrzeug montiert, dass die Flächenkamera 6 dem Positionsmaßstab 2 auf gleicher Höhe gegenüberliegt, so dass ein Segment des Positionsmaßstabs 2 im Sichtfeld 8 der Flächenkamera 6 liegt. Zweckmäßigerweise kann dabei der Flächenkamera 6 ein nicht dargestelltes Objektiv vorgeordnet sein.

Die im Gehäuse 4 stationär angeordnete Beleuchtungseinheit 5 emittiert Lichtstrahlen 9, mittels derer eine homogene Ausleuchtung des im Sichtfeld 8 der Flächenkamera 6 liegenden Segments des Positionsmaßstabs 2 erfolgt. Prinzipiell kann die Beleuchtungseinheit 5 auch außerhalb des Gehäuses 4 angeordnet sein. Zur Strahlformung der Lichtstrahlen 9 kann der Beleuchtungseinheit 5 eine geeignete, nicht dargestellte Optik nachgeordnet sein.

Die Beleuchtungseinheit 5 kann Lichtstrahlen 9 im sichtbaren oder unsichtbaren Bereich, insbesondere Infrarotbereich, emittieren. Die Beleuchtungseinheit 5 kann dabei von einer Halogenlampe, einem Flächenstrahler bestehend aus einem Leuchtdiodenarray oder dergleichen gebildet sein. Durch die Ansteuerung der Beleuchtungseinheit 5 über die Auswerteeinheit 7 kann diese Lichtstrahlen 9 im Dauer- oder Pulsbetrieb, insbesondere Blitzlichtbetrieb, emittieren.

Das Positionsmaßstab 2 besteht aus einer Linearanordnung von äquidistant in Reihe angeordneten Marken, wobei die Marken im vorliegenden Fall als Barcodes 10 ausgebildet sind.

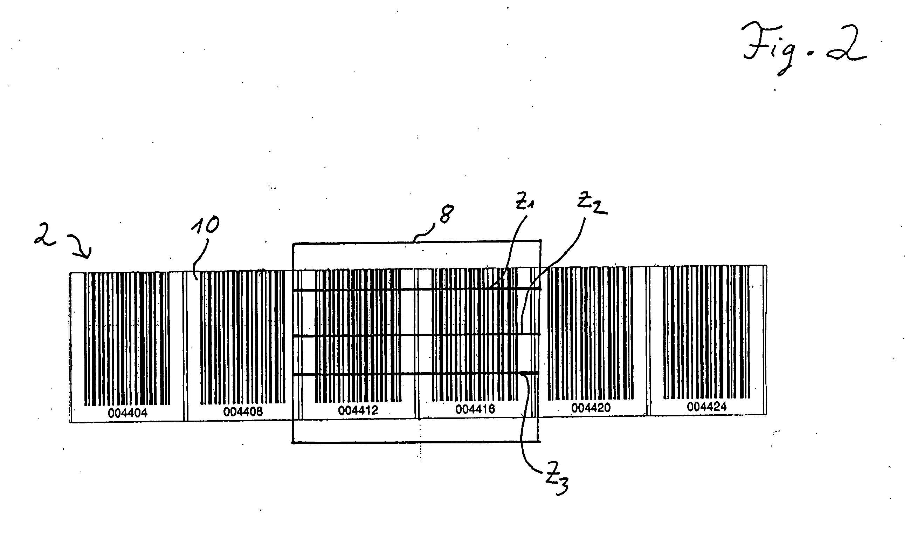

Wie insbesondere aus Figur 2 ersichtlich weisen die Barcodes 10 Strichmuster bestehend aus hellen und dunklen Strichelementen auf, in welchen die Absolutposition der Barcodes 10 innerhalb des Positionsmaßstabs 2 kodiert sind. Die Längsachsen der Strichelemente verlaufen zumindest näherungsweise senkrecht zu der Bewegungsrichtung B. Wie aus Figur 2 erkennbar weisen die einzelnen Barcodes 10 identische Breiten auf, die lückenlos zum Positionsmaßstab 2 aneinander gereiht sind. Die Absolutpositionen sind zudem in Klartext auf die Marken aufgedruckt, so dass die positionsgenaue Installation des Positionsmaßstabs 2 für eine Bedienperson erleichtert wird. Der Positionsmaßstab 2 ist im vorliegenden Fall als Klebeband ausgebildet und kann somit schnell und einfach am jeweiligen Gegenstand montiert werden.

Wie aus Figur 1 und insbesondere aus Figur 2 entnehmbar, ist das Sichtfeld 8 der Flächenkamera 6 derart ausgebildet, dass bis zu zwei Barcodes 10, in jedem Fall jedoch bei beliebigen Abtastzeitpunkten wenigstens ein vollständiger Barcode 10 von der Flächenkamera 6 erfasst wird.

Im vorliegenden Fall wird jeweils der erste in Bewegungsrichtung B vollständig innerhalb des Sichtfeldes 8 der Flächenkamera 6 liegende Barcode 10 zur Positionierung des Sensors 1 relativ zum Positionsmaßstab 2 herangezogen. Hierzu wird in der Auswerteeinheit 7 zunächst die die Absolutposition enthaltene Kodierung des Strichmusters erfasst. Dann wird zudem die Lage des Barcodes 10 innerhalb des Sichtfelds 8 der Flächenkamera 6 erfasst. Dadurch ist die Lage des Sensors 1 zum Positionsmaßstab 2 exakt und vollständig bestimmt. Wesentlich hierbei ist, dass der Erfassungszeitpunkt des Bildes des jeweiligen Barcodes 10 mittels der Flächenkamera 6 insbesondere durch die Ansteuerung mit der Auswerteeinheit 7 genau vorgegeben ist. Zudem erfolgt auch das Auslesen der Ausgangssignale der Flächenkamera 6, das heißt der einzelnen Pixelwerte der Flächenkamera 6 synchron und damit in einem definierten zeitlichen Bezug zum Aufnahmezeitpunkt des Bildes mit der Flächenkamera 6. Damit kann ohne externe Synchronisationssignale oder dergleichen aus der Lage des jeweiligen Barcodes 10 sowie aus der in diesem enthaltende Kodierung die Position des Sensors 1 relativ zum Positionsmaßstab 2 exakt bestimmt werden.

Wie aus Figur 2 ersichtlich wird zur Bestimmung des im Strichmuster des Barcodes 10 enthaltenen Codes nicht der gesamte Bildinhalt des mit der Flächenkamera 6 registrierten Bildes ausgewertet. Vielmehr werden zur Ermittlung des Strichmusters einzelne von einer Reihe von Pixeln gebildete Zeilen Z₁, Z₂, Z₃ der Flächenkamera 6 ausgewertet. Wie aus Figur 2 ersichtlich, werden im vorliegenden Fall drei in Bewegungsrichtung B verlaufende Zeilen Z₁, Z₂, Z₃ zur Bestimmung des Strichmusters herangezogen. Dabei liegen die Zeilen Z₁ , Z₂, Z₃ quer zur Bewegungsrichtung B in Abstand zueinander, so dass mit diesen das Strichmuster des Barcodes 10 in unterschiedlichen Höhenlagen erfasst wird. Die Lagen und die Abstände der Zeilen Z₁, Z₂, Z₃ sind derart gewählt, dass auch bei leicht schräg zur Bewegungsrichtung B verlaufenden Zeilen Z₁, Z₂, Z₃ in Folge von Dejustagen oder dergleichen mit wenigstens einer Zeile Z₁, Z₂, Z₃ das Strichmuster vollständig erfasst wird. Zudem wird durch die Lage der zueinander beabstandeten Zeilen Z₁, Z₂, Z₃ auch bei einzelnen lokalen Verschmutzungen des Barcodes 10 mit wenigstens einer Zeile Z₁, Z₂, Z₃ das Strichmuster des Barcodes 10 noch vollständig erfasst. Durch geeignete Selektionsalgorithmen wie Mehrheitsentscheidungen werden in der Auswerteeinheit 7 nur die Zeilen Z₁, Z₂, Z₃ der Flächenkamera 6 zur Auswertung des Barcodes 10 herangezogen, mit welchen der vollständige Barcode 10 erfasst wurde. Die Abstände und Anzahlen der zur Auswertung des Strichmusters herangezogenen Zeilen Z₁, Z₂, Z₃ können applikationsspezifisch variiert werden.

Bei dem in Figur 2 dargestellten Fall werden jeweils einzelne in Bewegungsrichtung B verlaufende Zeilen der Flächenkamera 6 zur Bestimmung des Strichmusters der Flächenkamera 6 herangezogen, wobei im einfachsten Fall sogar eine einzelne Zeile zur Auswertung des Strichmusters herangezogen werden kann.

In einer vorteilhaften Weiterbildung können anstelle einer einzelnen Zeile mehrere benachbarte, in Bewegungsrichtung B verlaufende Zeilen herangezogen werden. Diese benachbarte Zeilen bilden eine Gruppe, in welcher jeweils benachbarte Pixel der einzelnen Zeilen miteinander korreliert werden. Die Korrelation der Pixelwerte erfolgt zweckmäßigerweise durch eine Mittelwertbildung. Durch diese Korrelation der Pixelwerte wird eine signifikante Kontrastverbesserung bei der Barcodedetektion und damit auch eine Erhöhung der Nachweisempfindlichkeit erhalten. Bei diesem Auswerteverfahren kann zudem die erhaltene Kontrastverbesserung in der Auswerteeinheit 7 bewertet werden. Wird dabei festgestellt, dass der Kontrast für eine sichere Auswertung der Barcodes 10 nicht ausreichend ist, kann über den Sensor 1 eine entsprechende Warnmeldung ausgegeben werden.

Ein derartiges Korrelationsverfahren kann insbesondere auch bei dem Ausführungsbeispiel gemäß Figur 2 durchgeführt werden. Anstelle dreier einzelner Zeilen Z₁, Z₂, Z₃ werden dann drei Gruppen mit jeweils benachbarten Zeilen miteinander korreliert, wobei die durch die Korrelation gewonnenen Zeilenwerte die separaten Zeilen Z₁, Z₂, Z₃ ersetzen.

Erfindungsgemäß werden bei der optoelektronischen Vorrichtung Einflüsse durch Dejustagen des Sensors 1 relativ zum Positionsmaßstab 2 selbsttätig kompensiert.

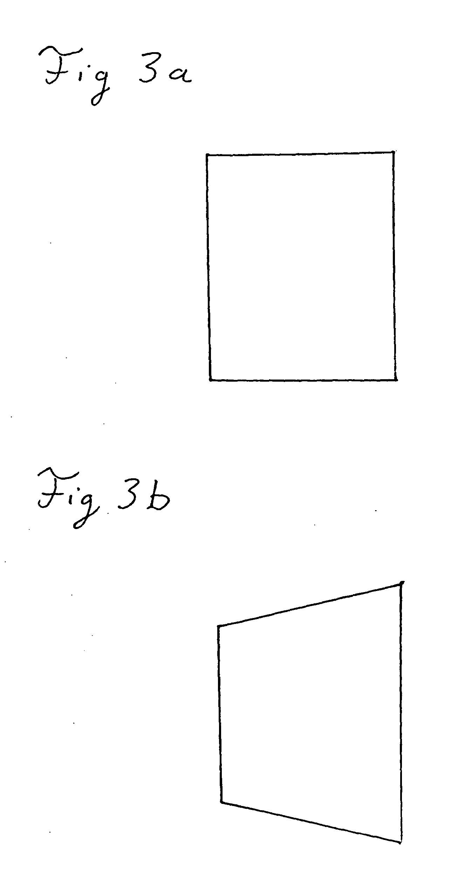

Hierzu wird in einem Einlernvorgang die Geometrie eines erfassten Barcodes 10 in der Auswerteeinheit 7 eingelernt und als Sollgröße abgespeichert. Dabei erfolgt die Ermittlung der Sollgröße nach erfolgter Ausrichtung des Sensors 1 relativ zum Positionsmaßstab 2. Figur 2 zeigt diese justierte Anordnung, bei welcher die Ebene der Flächenkamera 6 parallel zur Ebene des Positionsmaßstabs 2 orientiert ist. Damit wird ein eine rechteckige Kontur aufweisender Barcode 10 gemäß Figur 2 entsprechend als rechteckige Kontur, wie in Figur 3a dargestellt, auf der Flächenkamera 6 abgebildet, wobei diese Kontur zusammen mit den bekannten geometrischen Daten des Barcodes 10 der Auswerteeinheit 7 als Sollgröße abgespeichert wird.

Während des Betriebs der optoelektronischen Vorrichtung kann durch externe Störeinflüsse wie zum Beispiel Erschütterungen und Stöße eine Dejustage der optoelektronischen Vorrichtung erfolgen, so dass die Ebene der Flächenkamera 6 bezüglich der Ebene des Positionsmaßstabs 2 um einen räumlichen Kippwinkel verkippt ist. Dementsprechend wird die rechteckige Kontur eines Barcodes 10 nicht mehr, wie in Figur 3a dargestellt, als Rechteck, sondern, wie in Figur 3b dargestellt, als Trapez abgebildet. Bei bekannter Barcode-Geometrie werden in der Auswerteeinheit 7 durch Vergleich der aktuell registrierten Kontur gemäß Figur 1 und der als Sollgröße gespeicherten Kontur gemäß Figur 3a Korrekturwerte bei der Bestimmung der Lage des Barcodes 10 innerhalb des Sichtfelds 8 berechnet. Dadurch werden durch die Dejustage bedingte Störeinflüsse bei der Lagebestimmung vollständig kompensiert.

### Bezugszeichenliste

- (1): Sensor
- (2): Positionsmaßstab
- (3): Regallager
- (4): Gehäuse
- (5): Beleuchtungseinheit
- (6): Flächenkamera
- (7): Auswerteeinheit
- (8): Sichtfeld
- (9): Lichtstrahlen
- (10): Barcodes

- B: Bewegungsrichtung
- M: übereinander liegende Zeilen
- N: Pixel
- Z₁: Zeile
- Z₂: Zeile
- Z₃: Zeile

## Patentansprüche

1. Verfahren zur Bestimmung der Position eines Sensors (1) relativ zu einem von Marken gebildeten Positionsmaßstab (2), welche relativ zueinandern bewegbar sind, wobei der Sensor (1) eine Beleuchtungseinheit (5) zur Beleuchtung der Marken, eine Flächenkamera (6) zur Erfassung der Marken und eine Auswerteeinheit (7) zur Auswertung der Ausgangssignale der Flächenkamera (6) aufweist, wobei durch Erfassung von in den Marken kodierten Positionsinformationen und durch Ermittlung der Lage einer jeweils erfassten Marke innerhalb des von der Flächenkamera (6) erfassten Bildes die Position des Sensors (1) relativ zum Positionsmaßstab (2) bestimmt wird, **dadurch gekennzeichnet, dass** während eines Einlernvorganges der Sensor (1) relativ zum Positionsmaßstab (2) ausgerichtet wird und nach erfolgter Ausrichtung die Geometrie wenigstens einer mit der Flächenkamera (6) erfassten Marke als Sollgröße in der Auswerteeinheit (7) abgespeichert wird, und dass während der auf den Einlernvorgang folgenden Betriebsphase aus den Abweichungen aktuell ermittelter Geometrien von Marken in Bezug auf die abgespeicherte Sollgröße in der Auswerteeinheit (7) Korrekturwerte zur Kompensation von Justagefehlern berechnet werden.

2. Verfahren nach Anspruch 1, **dadurch gekennzeichnet, dass** als Flächenkamera (6) eine CCD-Kamera oder CMOS-Kamera verwendet wird.

3. Verfahren nach einem der Ansprüche 1 oder 2, **dadurch gekennzeichnet, dass** die Beleuchtungseinheit (5) im Sensor (1) integriert ist.

4. Verfahren nach einem der Ansprüche 1 oder 2, **dadurch gekennzeichnet, dass** die Beleuchtungseinheit (5) eine externe Einheit bildet.

5. Verfahren nach einem der Ansprüche 3 oder 4, **dadurch gekennzeichnet, dass** mit der Beleuchtungseinheit (5) das Sichtfeld (8) der Flächenkamera (6) homogen ausgeleuchtet wird.

6. Verfahren nach einem der Ansprüche 3 - 5, **dadurch gekennzeichnet, dass** die Beleuchtungseinheit (5) im Dauer- oder im Pulsbetrieb betrieben wird.

7. Verfahren nach einem der Ansprüche 1 - 6, **dadurch gekennzeichnet, dass** die Ausgangssignale der Flächenkamera (6) bildenden Pixelwerte synchron in die Auswerteeinheit (7) ausgelesen werden.

8. Verfahren nach einem der Ansprüche 1 - 7, **dadurch gekennzeichnet, dass** in jeder Marke deren Absolutort innerhalb des Positionsmaßstabs (2) kodiert ist.

9. Verfahren nach Anspruch 8, **dadurch gekennzeichnet, dass** die Marken als Datamatrix-Codes ausgebildet sind.

10. Verfahren nach Anspruch 8, **dadurch gekennzeichnet, dass** die Marken von Barcodes (10) bestehend aus Folgen von hellen und dunklen Strichelementen gebildet sind.

11. Verfahren nach Anspruch 10, **dadurch gekennzeichnet, dass** die Längsachsen der Strichelemente des Barcodes (10) senkrecht zur Bewegungsrichtung (B) des Sensors (1) relativ zum Positionsmaßstab (2) orientiert sind.

12. Verfahren nach einem der Ansprüche 9 - 11, **dadurch gekennzeichnet, dass** zur Erfassung eines Barcodes (10) die Pixel wenigstens einer in Bewegungsrichtung (B) verlaufenden Zeile der Flächenkamera (6) ausgewertet wird.

13. Verfahren nach Anspruch 12, **dadurch gekennzeichnet, dass** zur Erfassung eines Barcodes (10) die Pixel einer Gruppe von nebeneinander liegenden, in Bewegungsrichtung (B) verlaufenden Zeilen der Flächenkamera (6) ausgewertet werden.

14. Verfahren nach Anspruch 13, **dadurch gekennzeichnet, dass** jeweils benachbarte Pixel verschiedener Zeilen einer Gruppe korreliert werden.

15. Verfahren nach Anspruch 14, **dadurch gekennzeichnet, dass** die Korrelation benachbarter Pixel verschiedener Zeilen einer Gruppe durch Mittelwertbildung erfolgt.

16. Verfahren nach einem der Ansprüche 12 - 15, **dadurch gekennzeichnet, dass** zur Erfassung eines Barcodes (10) die Pixel mehrerer in Abstand zueinander liegender, in Bewegungsrichtung (B) verlaufender Zeilen der Flächenkamera (6) ausgewertet werden.

17. Verfahren nach einem der Ansprüche 1 bis 16, **dadurch gekennzeichnet, dass** der Einlernvorgang bei relativ zum Positionsmaßstab (2) stillstehenden Sensor (1) durchgeführt wird.

## Claims

1. Method of determining the position of a sensor (1) relative to a position scale (2) formed by marks, the sensor and scale being movable relative to one other, wherein the sensor (1) comprises a lighting unit (5) for illuminating the marks, an area camera (6) for detecting the marks and an evaluating unit (7) for evaluating the output signals of the area camera (6), wherein the position of the sensor (1) relative to the position scale (2) is determined by detection of position data coded in the marks and by ascertaining the position of a respectively detected mark within the image detected by the area camera (6), **characterised in that** during a learning process the sensor (1) is orientated relative to the position scale (2) and after orientation has been carried out the geometry of at least one mark detected by the area camera (6) is stored as target magnitude in the evaluating unit (7), and that, during the operating phase following the learning process, correction values for compensation for adjustment errors are calculated from the deviations of currently ascertained geometries of marks with respect to the stored target magnitude in the evaluating unit (7).

2. Method according to claim 1, **characterised in that** a CCD camera or a CMOS camera is used as area camera (6).

3. Method according to one of claims 1 and 2, **characterised in that** a sensor (1) is integrated in the lighting unit (5).

4. Method according to one of claims 1 and 2, **characterised in that** a light unit (5) forms an external unit.

5. Method according to one of claims 3 and 4, **characterised in that** the viewing field (8) of the area camera (6) is homogeneously illuminated by lighting unit (5).

6. Method according to any one of claims 3 to 5, **characterised in that** the lighting unit (5) is operated in permanent operation or pulsed operation.

7. Method according to any one of claims 1 to 6, **characterised in that** pixel values forming the output signals of the area camera (6) are read synchronously into the evaluating unit (7).

8. Method according to any one of claims 1 to 7, **characterised in that** in each mark the absolute location thereof within the position scale (2) is coded.

9. Method according to claim 8, **characterised in that** the marks are formed as datamatrix codes.

10. Method according to claim 8, **characterised in that** the marks are formed by bar codes (10) consisting of sequences of bright and dark bars.

11. Method according to claim 10, **characterised in that** the longitudinal axes of the bars of the bar code (10) are oriented perpendicularly to the direction (B) of movement of the sensor (1) relative to the position scale (2).

12. Method according to any one of claims 9 to 11, **characterised in that** for detection of a bar code (10) the pixel of at least one line, which extends in the movement direction (B), of the area camera (6) is evaluated.

13. Method according to claim 12, **characterised in that** for detection of a bar code (10) the pixels of a group of mutually adjacent lines, which extend in movement direction (B), of the area camera (6) are evaluated.

14. Method according to claim 13, **characterised in that** respectively adjacent pixels of different lines of a group are correlated.

15. Method according to claim 14, **characterised in that** the correlation of adjacent pixels of different lines of a group is carried out by mean value formation.

16. Method according to any one of claims 12 to 15, **characterised in that** for detection of a bar code (10) the pixels of several mutually spaced-apart lines, which extend in movement direction (B), of the area camera (6) are evaluated.

17. Method according to any one of claims 1 to 16, **characterised in that** the learning process is carried out with the sensor (1) stationary relative to the position scale.

## Revendications

1. Procédé pour déterminer la position d'un capteur (1) par rapport à une échelle de position (2) formée de marques, lesquels sont déplaçables l'un par rapport à l'autre, le capteur (1) présentant une unité d'éclairage (5) pour éclairer les marques, une caméra surfacique (6) pour saisir les marques et une unité d'évaluation (7) pour évaluer les signaux de sortie de la caméra surfacique (6), la position du capteur (1) par rapport à l'échelle de position (2) étant déterminée par saisie d'informations de position codées dans les marques et par détermination de la position d'une marque respective saisie à l'intérieur de l'image saisie par la caméra surfacique (6), **caractérisé en ce que** pendant un processus d'apprentissage, le capteur (1) est orienté par rapport à l'échelle de position (2) et, après orientation, la géométrie d'au moins une marque saisie par la caméra surfacique (6) est mémorisée en tant que grandeur de consigne dans l'unité d'évaluation (7), et que pendant la phase d'exploitation succédant au processus d'apprentissage, des valeurs de correction pour la compensation des erreurs d'ajustement sont calculées dans l'unité d'évaluation (7) à partir des écarts de géométries de marques actuellement déterminées par rapport à la grandeur de consigne mémorisée.

2. Procédé selon la revendication 1, **caractérisé en ce qu'**une caméra CCD ou une caméra CMOS est utilisée comme caméra surfacique (6).

3. Procédé selon l'une des revendications 1 ou 2, **caractérisé en ce que** l'unité d'éclairage (5) est intégrée dans le capteur (1).

4. Procédé selon l'une des revendications 1 ou 2, **caractérisé en ce que** l'unité d'éclairage (5) forme une unité externe.

5. Procédé selon l'une des revendications 3 ou 4, **caractérisé en ce que** l'unité d'éclairage (5) éclaire le champ de vision (8) de la caméra surfacique (6) d'une manière homogène.

6. Procédé selon l'une des revendications 3 à 5, **caractérisé en ce que** l'unité d'éclairage (5) fonctionne en mode permanent ou en mode pulsé.

7. Procédé selon l'une des revendications 1 à 6, **caractérisé en ce que** des valeurs de pixels formant les signaux de sortie de la caméra surfacique (6) sont lues de manière synchrone dans l'unité d'évaluation (7).

8. Procédé selon l'une des revendications 1 à 7, **caractérisé en ce que** dans chaque marque est codée sa position absolue dans l'échelle de position (2).

9. Procédé selon la revendication 8, **caractérisé en ce que** les marques sont réalisées sous la forme de codes DataMatrix.

10. Procédé selon la revendication 8, **caractérisé en ce que** les marques sont formées de codes-barres (10) composés de suites d'éléments linéaires clairs et sombres.

11. Procédé selon la revendication 10, **caractérisé en ce que** les axes longitudinaux des éléments linéaires du code-barres (10) sont orientés perpendiculairement à la direction de déplacement (B) du capteur (1) par rapport à l'échelle de position (2).

12. Procédé selon l'une des revendications 9 à 11, **caractérisé en ce que** pour saisir un code-barres (10), les pixels d'au moins une ligne de la caméra surfacique (6) s'étendant dans la direction de déplacement (B) sont évalués.

13. Procédé selon la revendication 12, **caractérisé en ce que** pour saisir un code-barres (10), les pixels d'un groupe de lignes de la caméra surfacique (6) juxtaposées, s'étendant dans la direction de déplacement (B), sont évalués.

14. Procédé selon la revendication 13, **caractérisé en ce que** des pixels voisins de différentes lignes d'un groupe sont chaque fois corrélés.

15. Procédé selon la revendication 14, **caractérisé en ce que** la corrélation de pixels voisins de différentes lignes d'un groupe est réalisée par formation de la moyenne.

16. Procédé selon l'une des revendications 12 à 15, **caractérisé en ce que** pour saisir un code-barres (10), les pixels de plusieurs lignes de la caméra surfacique (6) situées à distance les unes des autres, s'étendant dans la direction de déplacement (B), sont évalués.

17. Procédé selon l'une des revendications 1 à 16, **caractérisé en ce que** le processus d'apprentissage est effectué avec le capteur (1) immobile par rapport à l'échelle de mesure (2).
